(19) Europäisches Patentamt

European Patent Office

Office européen des brevets

(11) Publication number: **0 021 524**
**B1**

(12) **EUROPEAN PATENT SPECIFICATION**

(45) Date of publication of patent specification: **29.05.85**

(21) Application number: **80200568.6**

(22) Date of filing: **17.06.80**

(51) Int. Cl.⁴: **G 01 M 13/00, G 01 B 11/06**

(54) **Apparatus for measuring the lubrication of surfaces rolling or sliding relative to each other and lubricated with a lubricant.**

(30) Priority: **28.06.79 NL 7905026**

(43) Date of publication of application:
**07.01.81 Bulletin 81/01**

(45) Publication of the grant of the patent:
**29.05.85 Bulletin 85/22**

(84) Designated Contracting States:
**CH DE FR GB IT LI NL SE**

(56) References cited:
**US-A-3 000 101**
**US-A-3 176 286**

(73) Proprietor: **SKF Industrial Trading &**
**Development Co, B.V.**
**Postbus 50**
**NL-3430 AB Nieuwegein (NL)**

(72) Inventor: **Dolfsma, Hendrik**
**Strawinskystraat 94**
**Nieuwegein (NL)**
Inventor: **Heemskerk, Rutgerus S.**
**Olmenstraat 2**
**Vianen (NL)**
Inventor: **Vermeiren, Karel N.**
**Jasmijnlaan 7**
**Woerden (NL)**

(74) Representative: **Merkelbach, B.**
**SKF Engineering & Research Centre B.V.**
**Kelvinbaan 16 P.O. Box 50**
**NL-3430 AB Nieuwegein (NL)**

Courier Press, Leamington Spa, England.

## Description

The invention relates to an apparatus for measuring the lubrication of surfaces rolling or sliding relative to each other, said surfaces forming the plates of a capacitor when separated by a film of a lubricant applied to the surfaces, the apparatus comprising;

— a condenser connected to one of the plates of the capacitor, the other plate thereof being grounded,
— an oscillator applying an a.c. current to the series circuit formed by the condenser and the capacitor,
— circuit means for deriving a signal representative of the capacity of the capacitor.

An apparatus of this type is e.g. described in US—A—3,176,286. According to this type of measuring means the capacitance is picked up in a capacitive bridge to which the AC voltage signal of the oscillator is supplied. Besides, a measuring circuit is connected to the bridge, delivering an output signal corresponding to the capacitance to be measured and indicative of metallic contacts between the surfaces forming the capacitor. In practice, this known apparatus is found not to function satisfactorily, in part because, with film thicknesses small compared to the surface rugosity, far higher capacitances are measured than the values theoretically to be expected.

The object of the invention is to provide a measuring apparatus of the kind referred to above wherein the disadvantages of the known apparatus are eliminated.

According to the invention, the apparatus is for that purpose characterized in that the circuit means comprise the following:

— a demodulating circuit constisting of a multiplier followed by a low-pass filter, one input of the multiplier being connected to the output of the oscillator and another input being supplied with the voltage across the capacitor,
— a processing circuit having two signal channels, the first of which channels comprises a circuit forming the reciprocal of the output signal from the low-pass filter, a subtraction circuit for subtracting a first predetermined voltage from the output of the reciprocal forming circuit and an evaluation circuit converting the output of the subtraction circuit into a signal corresponding to the thickness of the lubricant film, and the second of which channels comprises a comparator for comparing the output signal from the low-pass filter with a second predetermined voltage, an AND-gate receiving at its inputs the output signal from the comparator and clock pulses from a pulse-oscillator, respectively, a counter connected to the output of the AND-gate, and digital display means connected to the counter,
— timing means resetting the counter after a predetermined counting interval, the value of said second predetermined voltage, the length of the said interval and the frequency of the clock pulses being so selected that the number of pulses counted in said interval corresponds to the percentage of time in said interval for which the said surfaces have been in direct contact with each other.

In this way, a device is obtained by means of which simultaneously the thickness of the lubricant film and the percentage contact time during a certain interval of measurement can be measured. Thus it is possible at low values of λ, where λ is the ratio of the thickness of the lubricant film to the surface regosity, to correct the measured thickness of the film for the measured percentage contact time.

According to an advantageous embodiment of the invention the output of the counter is connected to compensating circuit means converting the measured percentage contact time into a correction signal supplied to a second input of the reciprocal forming circuit, in such a manner that with increasing percentage contact time, the output signal of the reciprocal forming circuit decreases. In this way an automatic correction of the thickness measurement of the lubricant film is obtained, thus providing an accurate result of measurement.

Preferably, the voltage occurring across the capacitance present between the lubricated surfaces is delivered to the demodulating circuit by way of a band-pass filter tuned to the oscillator frequency, the oscillator being likewise connected to the demodulating circuit by way of a band-pass filter tuned to the oscillating frequency. In this way any possible network interference deriving from the system to be tested is suppressed. The band-pass filter for the oscillator signal serves to maintain the correct phase relationship between the input signals of the demodulating circuit.

The invention will now be further illustrated with reference to the drawing, showing an embodiment by way of example.

Fig. 1 schematically shows a ball bearing, indicating the capacitances present.

Fig. 2 is a block diagram of a portion of an embodiment of the apparatus according to the invention.

Fig. 3 is a block diagram of an embodiment of the apparatus according to the invention.

Figs. 4a and 4b show two signals occurring in the apparatus of Fig. 3.

In the following description of the apparatus according to the invention, the measurement of the lubrication condition of a ball bearing lubricated with oil will be explained as a practical example, but this does not imply that the use of the device is limited to that application.

It is known that the thickness of the oil film in a lubricated ball bearing depends on various factors, among them the rotational speed and the load. The thickness h of the oil film can be measured by measuring the capacitance $C_b$ of the ball bearing, since $C_b$ is given by

$$C_b = \varepsilon_o \varepsilon_r A/h$$

where $\varepsilon_r$ is the relative dielectric constant of the oil used, while A is the area under which the film of oil is regarded as being present. The area A may be referred to as the area of contact.

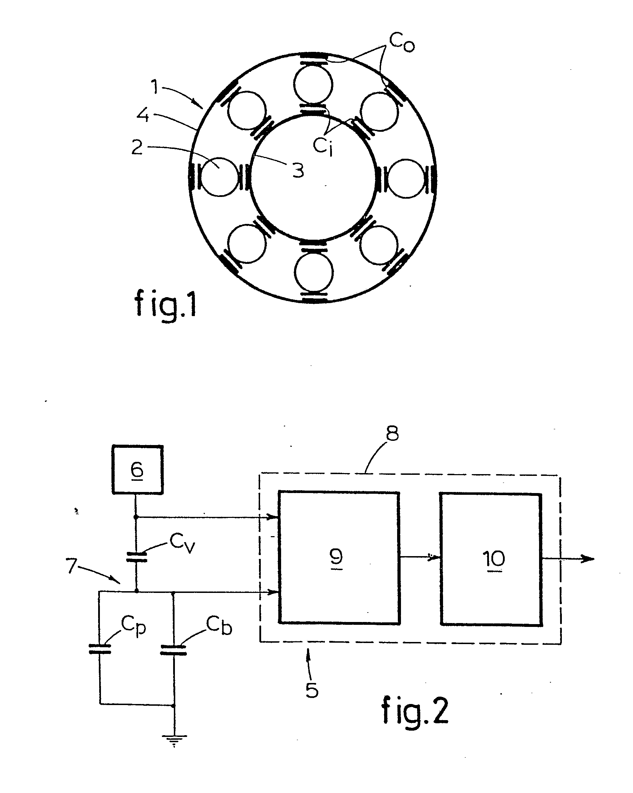

Fig. 1 shows a ball bearing 1 in which the various capacitances occurring between the balls 2 and the inner race 3 and outer race 4 are schematically indicated. These capacitances $C_i$ and $C_o$ together form the capacitance $C_b$ of the bearing:

$$C_b = \sum_{n=8} \frac{C_{in} \times C_{on}}{C_{in} + C_{on}}$$

Fig. 2 shows a device 5 by means of which the variation of the capacitance $C_b$ can be measured. The device 5 is equipped with an oscillator 6 delivering a sinusoidal AC voltage having a frequency of 0.9 MHz, for example, to a capacitive voltage divider 7, consisting of the capacitance $C_b$ and a condenser $C_v$. In parallel with the capacitance $C_b$, the total parasite capacitance $C_p$ is indicated as well. The voltage $V_b$ across the capacitance $C_b$ is modulated by the variation in the value of the capacitance $C_b$. This modulating signal is derived from the voltage $V_b$ by means of a demodulator 8, provided with multiplier 9 and a low-pass filter 10. The two inputs of the multiplier 9 are respectively connected to the output of the oscillator 6 and to the condenser $C_b$.

The demodulator 8 delivers an output signal $V_{LP}$ depending on the oil film thickness h and the time t:

$$V_{LP} = f(h,t)$$

When direct contact occurs between the lubricated surfaces (h=0), the signal $V_{LP}$ will become at least approximately zero. From the signal $V_{LP}$, therefore, the percentage contact time during a time interval of measurement can be derived, while by a suitable processing of the signals, signals can be formed that depend linearly on the oil film thickness h and the capacitance $C_b$ respectively.

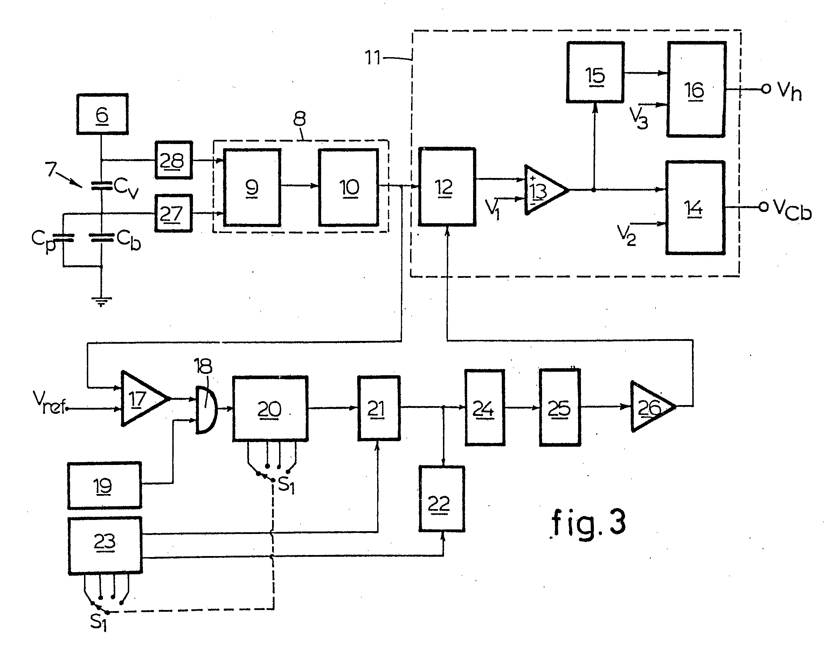

Fig. 3 shows an embodiment of the device 5 delivering output signals $V_h$ and $V_{Cb}$ corresponding to the oil film thickness h and the capacitance $C_b$. The operation of the device may be further explained as follows.

When the oscillator 6 delivers an output voltage $V_{osc} \sin \omega t$, the voltage across the capacitance $C_b$ is given by

$$V_b = \frac{V_{osc} C_v}{C_v + C_p + C_b}$$

whence it follows that the output voltage of the low-pass filter 10 is

$$V_{LP} = \frac{(V_{osc})^2}{2} : \frac{C_v}{C_v + C_p + C_b}. \tag{1}$$

From this signal $V_{LP}$, a circuit 11 forms the desired signals $V_h$ and $V_{Cb}$. For this purpose, the output of filter 10 is connected to a circuit 12 whose output signal $V_o$ corresponds to the reciprocal of $V_{LP}$. The signal $V_o$ is therefore given by

$$V_o = K_1 + K_2 C_b$$

where

$$K_1 = \frac{2}{(V_{osc})^2} (1 + C_p/C_v)$$

and

$$K_2 = \frac{2}{(V_{osc})^2} 1/C_v.$$

It is assumed that the amplitude of the output voltage $V_{osc}$ of the oscillator 6, the condenser $C_v$, and the total parasite capacitance $C_p$, are constant, so that the factors $K_1$ and $K_2$ may be represented by a constant voltage $V_1$ and $V_2$ respectively.

The signal $V_o$ is supplied to a subtraction circuit 13 reducing the signal $V_o$ by the quantity $V_1$. The output of circuit 13 is connected to a divider circuit 14 to which the voltage $V_2$ is also presented, so that the desired voltage $V_{Cb}$ appears at the output of the divider circuit 14.

The output of the subtraction circuit 13 is connected further to a circuit 15 forming the reciprocal of the output signal of the former circuit. The output of circuit 15 is connected to a multiplier 16 multiplying the output signal of circuit 15 by a constant factor, such that:

$$V_3 = \varepsilon_o \varepsilon_r A \ K_2$$

The multiplier 16 therefore supplies the signal $V_h$ corresponding to the oil film thickness h.

The signals $V_h$ and $V_{Cb}$ may for example be reproduced on an oscilloscope, so that the behavior of the oil film thickness h and capacitance $C_b$ as functions of time can be observed. It is also possible to represent only the low-frequency component of the signals $V_h$ and $V_{Cb}$, so that only the slow variation in oil film thickness h and capacitance $C_b$ will be visible.

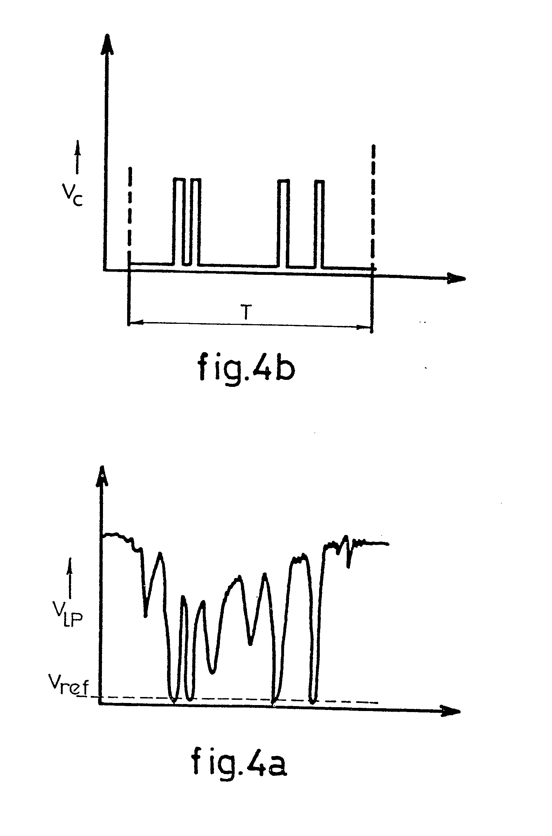

The percentage contact time may likewise be derived from the output signal $V_{LP}$ of filter 10. The output of filter 10 is for this purpose connected to the one input of a comparator 17, the other input of which is connected to an adjustable reference voltage $V_{ref}$. Fig. 4a shows an example of the output signal $V_{LP}$, with the reference voltage $V_{ref}$ also indicated. The reference voltage $V_{ref}$ is set to a small value. The output voltage $V_c$ of the comparator 17 passes from the low to the high level when the signal $V_{LP}$ falls below the reference voltage $V_{ref}$. The said voltage $V_c$ is represented in Fig. 4b. The output of the comparator 17 is connected to the first input of an AND gate 18, the second input of which is connected to a pulse oscillator 19 having a frequency of 1 MHz for example. The output of the AND gate 18 is connected by way of a divider 20 with adjustable divisor to a counter 21 controlling a digital display 22. The counter 21 thus counts the number of pulses passed through the AND gate 18 during the periods in which the output signal $V_c$ is high.

The circuit according to Fig. 3 is controlled by a timing circuit 23 determining an interval T after which the counter 21 is set back to zero. The frequency of the oscillator 19 and the length of the interval T are so chosen that the display 22 can reach a maximum reading of 99.999, should the signal $V_{LP}$ be smaller than the reference voltage $V_{ref}$ throughout the entire interval T. The display 22 thus indicates the percentage contact time for the interval T.

The interval T is adjustable by means of a switch $S_1$, which also sets the divisor of the divider 20, so that for each interval, the display 22 can attain a maximum reading of 99.999% at the selected oscillator frequency. After elapse of each interval T, the counter 21 is set back to zero by the timing circuit 23, whereupon a new interval is begun. The display 22 may of course be so controlled that a continuous indication is maintained. In measuring the state of lubrication of a ball bearing, the interval T may for example coincide with the time required for one revolution.

It has been found that when measuring the oil film thickness h at low values of λ, where λ is the ratio between the oil film thickness and the surface rugosity, a smaller film thickness is registered than the value theoretically to be expected. This is due to the fact that the average oil film thickness measured is sharply dminished by the comparatively large number of direct contacts taking place between the lubricated surfaces.

Because the device according to the invention also measures the percentage contact time, the measurement of the oil film thickness h and capacitance $C_b$ can be corrected, obtaining a more accurate result of measurement of the thickness of the oil film. This correction may be carried out in various ways. It is possible for example to have the percentage contact time influence the output signals $V_{CB}$ and $V_h$ directly.

An alternative possibility is schematically indicated in Fig. 3. A circuit 24 forms the complement of the percentage contact time, which complement is converted by a digital-analog converter 25 into an analog voltage. This analog voltage is amplified by a factor A by means of an amplifier 26, the output of the amplifier 26 controlling the circuit 12 that supplies the reciprocal of $V_{LP}$ as output signal. The signal $V_o$ is thereby corrected, so that the output signals $V_h$ and $V_{Cb}$ are corrected simultaneously. The factor A depends on the set reference voltage $V_{ref}$ for the comparator 17. This reference voltage corresponds to a certain maximum capacitance attained by the quantity $C_b$ upon occurrence of metal-to-metal contact.

The circuit 12 may for example be a circuit whose output signal $V_o$ is equal to

$$\frac{10Y}{9}(Z/X)^m.$$

The output of the amplifier 26 is then connected to input Y and the output of filter 10 to input X, while the factor m is set to a value of one and the input Z is placed at a suitable constant voltage.

The voltage $V_b$ across the capacitance $C_b$ may contain a component of interference from the network frequency, disrupting the proper operation of the device. This difficulty is eliminated in the embodiment of the device according to the invention as shown by way of example in Fig. 3 by supplying the voltage $V_b$ to the demodulator 8 by way of a band-pass filter 27 tuned to the oscillator frequency. The output signal of the oscillator 6 is delivered to the demodulator 8 by way of a similar band-pass filter 28 to maintain a correct phase relationship between the input signals of the demodulator 8.

**Claims**

1. An apparatus for measuring the lubrication of surfaces rolling or sliding relative to each other, said surfaces forming the plates of a capacitor when separated by a film of a lubricant applied to the surfaces, the apparatus comprising:

— a condenser ($C_v$) connected to one of the plates of the capacitor ($C_b$), the other plate thereof being grounded,
— an oscillator (6) applying an a.c. current to the series circuit formed by the condenser ($C_v$) and the capacitor ($C_b$),
— circuit means (8—28) for deriving a signal representative of the capacity of the capacitor ($C_b$),

characterized in that the circuit means comprise the following:

— a demodulating circuit (8) consisting of a multiplier (9) followed by a low-pass filter (10), one input of the multiplier (9) being connected to the output of the oscillator (6) and another input being supplied with the voltage across the capacitor ($C_b$),
— a processing circuit (11—23) having two signal channels, the first of which channels comprises a circuit (12) forming the reciprocal of the output signal from the low-pass filter (10), a subtraction circuit (13) for subtracting a first predetermined voltage ($V_1$) from the output of the reciprocal forming circuit (12) and an evaluation circuit (15, 16) converting the output of the subtraction circuit into a signal ($V_h$) corresponding to the thickness of the lubricant film, and the second of which channels comprises a comparator (17) for comparing the output signal from the low-pass filter (10) with a second predetermined voltage ($V_{ref}$), an AND-gate (18) receiving at its inputs the output signal from the comparator (17) and clock pulses from a pulse-oscillator (19), respectively, a counter (21) connected to the output of the AND-gate (18), and digital display means (22) connected to the counter,
— timing means (23) resetting the counter after a predetermined counting interval, the value of said second predetermined voltage ($V_{ref}$), the length of the said interval and the frequency of the clock pulses being so selected that the number of pulses counted in said interval corresponds to the percentage of time in said interval for which the said surfaces have been in direct contact with each other.

2. Apparatus according to claim 1, characterized in that the output of the counter (21) is connected to compensating circuit means (24, 25, 26) converting the measured percentage contact time into a correction signal supplied to a second input of the reciprocal forming circuit (12), in such a manner that with increasing percentage contact time, the output signal of the reciprocal forming circuit decreases.

3. Apparatus according to claim 2, characterized in that the said first channel further comprises a divider circuit (14) one input of which is connected to the output of the substraction circuit (13) while the other input is supplied with a third predetermined constant DC voltage ($V_2$), such that the output signal of the divider circuit corresponds to the capacitance occuring between the lubricated surfaces.

4. Apparatus according to any of the preceding claims, characterized in that the length of the counting interval is adjustable, the AND-gate (18) being connected to the counter (21) by way of a further divider circuit (20) whose divisor (20) increases in proportion to the prolongation of the counting interval.

5. Apparatus according to any of the preceding claims, characterized in that the voltage occurring across the capacitance present between the lubricated surfaces is delivered to the demodulating circuit (8) by way of a first band-pass filter (27) tuned to the oscillator frequency.

6. Apparatus according to claim 5, characterized in that the oscillator (6) is connected to the demodulating circuit (8) by way of a second band-pass filter (28) tuned to the oscillator frequency.

7. Apparatus according to claim 2, characterized in that the said compensating circuit means (24) comprise means (24) forming the complement of the percentage contact time, which complement is converted by a digital-analog converter (25) into an analog signal supplied to the input of an amplifier (26), which output delivers the correction signal to the reciprocal forming circuit (12).

## Patentansprüche

1. Vorrichtung zum Messen der Schmierung relativ zueinander rollender oder gleitender, mit einem Schmiermittel geschmierter Oberflächen, welche im durch ein Schmiermittel getrennten Zustand Kondensatorplatten bilden, bestehend aus:

— einem Kondensator ($C_v$), der mit der einen Platte des Kondensators ($C_b$) verbunden ist, während dessen andere Platte geerdet ist,
— einem Oszillator (6), der eine Wechselspannung an die durch den Kondensator ($C_v$) und den Kondensator ($C_b$) gebildete Reihenschaltung legt,
— und einer Schaltung (8—28) zur Entwicklung eines die Kapazität des Kondensators ($C_b$) darstellenden Signals,

dadurch gekennzeichnet, daß die Schaltung die folgenden Einheiten umfaßt:

— eine Demodulatorschaltung (8), bestehend aus einem Multiplizierer (9), an den sich ein Tiefpaßfilter (10) anschließt, wobei der eine Eingang des Multiplizierers (9) an den Ausgang des Oszillators (6) angeschlossen ist, während an einem anderen Eingang die Spannung über den Kondensator ($C_b$) anliegt,
— eine Prozessorschaltung (11—23) mit zwei Signalkanälen, zu deren erstem eine den Reziprokwert des Ausgangssignals des Tiefpaßfilters (10) bildene Schaltung (12), eine von deren Ausgangssignal eine erste vor-bestimmte Spannung ($V_1$) abziehende Subtraktionsschaltung (13) und eine deren Ausgangssignal in ein der Schmierfilmdicke entsprechendes Signal ($V_h$) umwandelnde Auswerteschaltung (15, 16) gehören, während zu dem zweiten Kanal ein Vergleicher (17), der das Ausgangssignal des Tiefpaßfilters (10) mit einer zweiten · vorbestimmten Bezugs-spannung ($V_{ref}$) vergleicht, ein an seinen Eingängen das Ausgangssignal des Vergleichers (17) und Zeitimpulse eines Impulsoszillators (19) empfangendes UND-Gatter, ein mit dessen Ausgang verbundener Zähler (21) und eine an diesen angeschlossene Digitalanzeige (22) gehören, und
— eine Zeitgeberschaltung (23), die den Zähler nach einem vorbestimmten Zählinterval zurückstellt, wobei der Wert der zweiten vorbestimmten Bezugsspannung ($V_{ref}$), die Länge des Zählintervalls und die Frequenz der Zeitimpulse so gewählt sind, daß die Zahl der im Zählintervall gezählten Impulse dem Prozentsatz der Zeit des Zählintervalls entspricht, während der die Oberflächen in direkter Berührung standen.

2. Vorrichtung nach Anspruch 1, dadurch gekennzeichnet, daß der Ausgang des Zählers (21) mit einer Ausgleichsschaltung (24, 25, 26) verbunden ist, welche den gemessenen Prozentsatz der Berührungszeit in ein Korrektursignal umwandelt, das einem zweiten Eingang der den Reziprokwert bildenen Schaltung (12) zugeleitet wird, derart, daß mit steigendem Prozentsatz der Brührungszeit das Ausgangssignal der den Reziprokwert bildenden Schaltung zunehmend verkleinert wird.

3. Vorrichtung nach Anspruch 2, dadurch gekennzeichnet, daß zu dem ersten Kanal weiterhin eine Teilerschaltung (14) gehört, deren einer Eingang mit dem Ausgang der Subtraktionsschaltung (13) verbunden ist, während an dem anderem Eingang eine dritte vorbestimmte konstante Gleichspannung ($V_2$) anliegt, so daß das Asugangssignal der Teilerschaltung der Kapazität zwischen den geschmierten Oberflächen entspricht.

4. Vorrichtung nach einem der vorhergehenden Ansprüche, dadurch gekennzeichnet, daß die Länge des Zählintervalls einstellbar ist, wobei das UND-Gatter (18) mit dem Zähler (21) über eine weitere Teilerschaltung (20) verbunden ist, deren Divisor proportional zur Verlängerung des Zählintervalls ansteigt.

5. Vorrichtung nach einem der vorhergehenden Ansprüche, dadurch gekennzeichnet, daß die zwischen den geschmierten Oberflächen bei vorhandener Kapazität auftretende Spannung der Demodulatorschaltung (8) über ein erstes auf die Oszillatorfrequenz abgestimmtes Bandfilter (27) zugeleitet wird.

6. Vorrichtung nach Anspruch 5, dadurch gekennzeichnet, daß der Oszillator (6) über ein zweites auf die Oszillator-frequenz abgestimmtes Bandfilter (28) mit der Demodulator-schaltung (8) verbunden ist.

7. Vorrichtung nach Anspruch 2, dadurch gekennzeichnet, daß die Ausgleichsschaltung Mittel (24) zur Bildung des Komplements des Prozentsatzes der Berührungszeit aufweist, wobei das Komplement durch einen Digital-Analog-Wandler (25) in ein analoges Signal umgewandelt wird, welches dem Eingang eines Verstärkers (26) zugeleitet wird, dessen Ausgang das Korrektursignal an die den Reziprokwert bildende Schaltung (12) abgibt.

### Revendications

1. Appareil permettant de mesurer la lubrification de surfaces roulant ou glissant l'une par rapport à l'autre, lesdites surfaces formant les plaques d'un condensateur de mesure lorsqu'elles sont séparées par une pellicule d'un lubrifiant appliqué sur les surfaces, cet appareil comprenant:

— un condensateur ($C_v$) raccordé à l'une des plaques du condensateur de mesure ($C_b$), dont l'autre plaque est reliée à la terre,
— un oscillateur (6) appliquant un courant alternatif au circuit série formé par le condensateur ($C_v$) et le condensateur de mesure ($C_b$),
— un montage électrique (8—28) permettant de dériver un signal représentatif de la capacité du condensateur de mesure ($C_b$),

caractérisé en ce que le montage électrique comprend les éléments suivants:

— un circuit démodulateur (8) composé d'un multiplicateur (9) suivi par un filtre passe-bas (10), l'une des entrées du multiplicateur (9) étant raccordée à la sortie de l'oscillateur (6), et une autre entrée étant alimentée par la tension aux bornes du condensateur de mesure ($C_b$),
— un circuit de traitement (11—23) ayant deux canaux de signaux, le premier de ces canaux comprenant un circuit (12) formant l'inverse du signal de sortie du filtre passe-bas (10), un circuit de soustraction (13) permettant de soustraire une première tension prédéterminée ($V_1$) du signal de sortie du circuit (12) de formation d'inverse, et un circuit d'évaluation (15, 16) transformant le signal de sortie du circuit de soustraction en un signal ($V_h$) qui correspond à l'épaisseur de la pellicule de lubrifiant, et le second de ces canaux comprenant un comparateur (17) permettant le comparer le signal de sortie du filtre passe-bas (10) avec une seconde tension prédéterminée ($V_{ref}$), un circuit-porte ET (18) recevant à ses entrées le signal de sortie du comparateur (17) et des impulsions d'horloge d'un oscillateur à impulsions (19), respectivement, un compteur (21) raccordé à la sortie du circuit-porte ET (18), et un moyen d'affichage numérique (22) raccordé au compteur,
— une minuterie (23) remettant le compteur à zéro après un intervalle de comptage prédéterminé, la valeur de ladite seconde tension prédéterminée ($V_{ref}$), la longueur dudit intervalle et la fréquence des impulsions d'horloge étant choisies de telle sorte que le nombre d'impulsions comptées dans ledit intervalle corresponde au pourcentage de temps dudit intervalle pendant lequel lesdites surfaces ont été en contact direct l'une avec l'autre.

2. Appareil selon la revendication 1, caractérisé en ce que la sortie du compteur (21) est raccordée à un circuit compensateur (24, 25, 26) qui transforme le temps de contact mesuré en pourcentage en un signal de correction qui est envoyé à une seconde entrée du circuit (12) de formation d'inverse, d'une manière telle que lorsque le pourcentage de temps de contact augmente, le signal de sortie du circuit de formation l'inverse diminue.

3. Appareil selon la revendication 2, caractérisé en ce que ledit premier canal comprend en outre un circuit diviseur (14) dont l'une des entrées est raccordée à la sortie du circuit de soustraction (13), tandis que l'autre entrée est alimentée par une troisième tension prédéterminée, continue et constante ($V_2$), de telle sorte que le signal de sortie du circuit diviseur corresponde à la capacité qui existe entre les surfaces lubrifiées.

4. Appareil selon l'une quelconque des revendications précédentes, caractérisé en ce que la longueur de l'intervalle de comptage est réglable, le circuit-porte ET (18) étant raccordé au compteur (21) au moyen d'un autre circuit diviseur (20) dont le diviseur augmente en proportion de la prolongation de l'intervalle de comptage.

5. Appareil selon l'une quelconque des revendications précédentes, caractérisé en ce que la tension qui apparaît aux bornes de la capacité existant entre les surfaces lubrifiées est délivrée au circuit démodulateur (8) par l'intermédiaire d'un premier filtre passe-bande (27) accordé sur la fréquence de l'oscillateur.

6. Appareil selon la revendicatin 5, caractérisé en ce que l'oscillateur (6) est raccordé au circuit démodulateur (8) par l'intermédiaire d'un second filtre passe-bande (28) accordé sur la fréquence de l'oscillateur.

7. Appareil selon la revendication 2, caractérisé en ce que le circuit compensateur (24) comprend un moyen (24) formant le complément du pourcentage du temps de contact, complément qui est transformé, par un convertisseur numérique-analogique (25), en un signal analogique qui est envoyé à l'entrée d'un amplificateur (26), dont la sortie délivre le signal de correction au circuit (12) de formation d'inverse.

0 021 524

fig.1

fig.2

1

fig.3

0 021 524

fig.4b

fig.4a